# EUROPÄISCHE PATENTSCHRIFT

(11) **EP 0 538 603 B1**
(45) Veröffentlichungstag und Bekanntmachung des Hinweises auf die Patenterteilung: **03.05.1995**
(21) Anmeldenummer: 92115159.3
(22) Anmeldetag: 04.09.1992
(51) Int. Cl.: D21C 5/02, D21B 1/32

(54) **Verfahren zur Entfernung von feinen Verunreinigungen aus Altpapierfaserstoff**
Process for the removal of fine contaminants from waste paper pulp
Procédé pour l'élimination d'impuretés fines de la pâte de vieux papiers

(30) Priorität: 19.10.1991 DE 4134607
(43) Veröffentlichungstag der Anmeldung: 28.04.1993
(73) Patentinhaber: Voith Sulzer Stoffaufbereitung GmbH, 88191 Ravensburg (DE)
(72) Erfinder: Matzke, Wolfgang, Dr., W-7981 Berg (DE); Michelewski, Bruno, W-7983 Wilhelmsdorf (DE)

(56) Entgegenhaltungen:
- EP-A- 0 284 526
- DE-A- 3 501 943
- PAPIER, DAS. Bd. 45, Nr. 7, Juli 1991, DARMSTADT DE Seiten 365 - 371 MAIER, J."Derzeitiger Stand der Verfahren zur Aufbereitung von Altpapier u. Problemstoffen für Hygiene- und graphische Papiere"

## Beschreibung

Die Erfindung bezieht sich auf ein Verfahren gemäß dem Oberbegriff des Anspruches 1.

Bekanntlich ist beim Einsatz von bedrucktem Altpapier zur Papiererzeugung in vielen Fällen die Entfernung der Druckfarbenpartikel erforderlich. Dazu werden, wie an sich bekannt, Waschverfahren oder Flotationsverfahren oder Kombinationen dieser Verfahren angewendet. Bei derartigen Reinigungsschritten werden die in der vorangegangenen Aufbereitung des Altpapiers von der Papierfaser abgetrennten, d.h. nicht mehr daran haftenden Druckfarbenpartikel abgeschieden. Dabei werden entweder die Hydrophobie der Druckfarben (selektive Flotation) oder ihre im Vergleich zu den Fasern wesentlich kleineren Dimensionen (Wäsche) genutzt.

Ähnliche Lösungen sind darüberhinaus auch auf andere feine Feststoffpartikel anwendbar, wenn sie im später erzeugten Papier unerwünscht sind, wie etwa die sogenannte Asche oder auch Reste von klebrigen Stoffen, sogenannte Stickies.

Es ist weiter bekannt, daß derartige Aufbereitungsverfahren in der Regel weitere Maßnahmen enthalten sollen, um die aus dem Hauptstrom des Faserstoff-Flusses ausgeschiedenen Verunreinigungen, insbesondere Druckfarben, so weit aufzubereiten, daß der eigentliche Schmutz deponiefähig ist und das beim Entfernen der Verunreinigungen abgezweigte und gereinigte Wasser sowie noch verwertbare Faser-, Füll- und Feinstoffe in den Produktionskreislauf zurückgeführt werden können. Es hat sich gezeigt, daß die drei Forderungen, nämlich die nach optimalen Produkteigenschaften, nach geringsten Verlusten an Faserstoff, weiteren Feststoffen und Wasser sowie die nach guter Entsorgungsmöglichkeit des Schmutzes schwer vereinbar sind.

Um Schwierigkeiten bei dem produzierten Papier zu vermeiden, mußte bisher in Kauf genommen werden, daß die durch den Waschvorgang aus dem Papierstoff entfernten Teilchen im wesentlichen vollständig aus dem Waschfiltrat entfernt und verworfen wurden. Dadurch ergab sich in nachteilhafter Weise eine große Menge zu entsorgenden Materials sowie eine geringere Ausbeute aus dem eingesetzten Rohstoff, dem Altpapier. Auf der anderen Seite kam es bei Vorliegen von sehr feinen Verunreinigungen oft zu Qualitätseinbußen, da sie bei den Verfahren mit höherer Ausbeute ungenügend entfernt wurden.

Zum Beispiel zeigt die Europäische Schrift 0 284 526 A1 ein Verfahren, bei dem erst am Ende der Aufbereitung eine die feinen Verunreinigungen erfassende Wäsche erfolgt. In einer vorangestellten Deinking-Flotation gehen wertvolle Stoffe verloren und belasten die Deponie unnötig.

Die Erfindung setzt sich die Aufgabe, das Aufbereitungsverfahren so zu gestalten, daß bei den Anforderungen entsprechender Qualität des erzeugten Papieres ein möglichst großer Anteil des eingesetzten Altpapiers verwertet werden kann und eine möglichst geringe zu deponierende Schmutzfracht anfällt.

Diese Aufgabe ist durch die im kennzeichnenden Teil des Anspruchs 1 genannten Maßnahmen in vollem Umfang erfüllt. Die sich anschließenden Unteransprüche geben spezielle Ausgestaltungen des Verfahrens an, durch die sich die Lösung der gestellten Aufgabe wirtschaftlicher oder noch effizienter durchführen läßt.

Mit Hilfe dieses Verfahrens ist es möglich, einen großen Teil der störenden feinen Partikel, insbesondere auch der sehr feinen Partikel, die zusammen mit dem Faserstoff schlecht flotierbar sind, frühzeitig aus dem zur Papiererzeugung gelangenden Altpapierfaserstoff auszuscheiden. Durch Wirkung der genannten Filtratflotation werden aus dem mit besonders feinen Verunreinigungen angereichertem Waschfiltrat diese entfernt, wobei die Entfernung ganz gezielt gesteuert werden kann. Dadurch ist es möglich, in der gereinigten Fraktion eventuell enthaltene Faserfeinstoffe und Asche wieder in eine Stelle nach dem Waschvorgang zurückzuleiten, wenn sie weiter verwendet werden sollen. Diese Wiedereinleitung ist sofort nach der Wäsche, also direkt in den dort erzeugten Gutstoff möglich aber auch an späteren Stellen des den Gutstoff weiterführenden Hauptstromes. Es ergibt sich so die Möglichkeit, eine optimale Verwendung des eingetragenen Faserstoffs zu gewährleisten, d.h. die Ausbeute zu steigern, und die zu deponierende Menge zu reduzieren.

Mit besonderem Vorteil werden die erfindungsgemäßen Verfahren angewendet bei Altpapier, das mit Farbstoffen bedruckt ist, die während der Auflösung in besonders feine Partikel zerfallen. Als solche Farbstoffe sind die sogenannten Flexofarben mit wasserbasierenden Bindemitteln anzusehen. Es ist aber auch denkbar, daß sonstige besonders feine Verunreinigungen mit Vorteil durch das erfindungsgemäße Verfahren entfernbar sind.

Als weiterer Vorteil der erfindungsgemäßen Verfahren ist anzusehen, daß eventuell vorhandene Restverunreinigungen in der gereinigten Fraktion, die aus der Filtratflotation in den Hauptstoffstrom zurückfließt, durch nachfolgende ein- oder auch mehrstufige Flotation oder Bleiche oder beides entfernt oder unsichtbar gemacht werden können.

Ein Vorteil der Verfahren ist auch, daß die Flotation des Waschfiltrates besonders effektiv sein kann, da das Waschfiltrat zwar mit feinen verunreinigenden Partikeln angereichert, aber anders als bei der Deinkingflotation weitestgehend frei von größeren die Flotationswirkung beeinträchtigenden Fasern ist. Auf diese Weise gelingt die Entfernung der ganz feinen Störstoffpartikel besonders effektiv.

Besonders vorteilhaft können die Verfahren gestaltet werden, da sich die Betriebsbedingungen in der Filtratflotation, welche das Waschfiltrat des Waschvorgangs behandelt, so wählbar sind, daß je nach Anforderung ein Teil der im Waschfiltrat enthaltenen Feinstoffe mit dem gereinigten Wasser, das die Filtratflotationsanlage verläßt, in den Hauptstoffstrom zurückgeführt wird. Es hat sich gezeigt, daß sehr gute Ergebnisse erzielbar sind, wenn der Flotationsschaum der Filtratflotationsanlage Löchstens die Hälfte oder etwa ein Drittel der im Zulauf enthaltenen Feststoffe enthält. An dieser Stelle ist selbstverständlich eine Optimierung durch Wahl dieser Betriebsparameter möglich.

Die erfinderischen Verfahren werden erläutert durch Zeichnungen. Es zeigen die Fig. 1, 2 und 3 jeweils ein Schema des erfindungsgemäßen Verfahrens. Fig. 4 zeigt schematisch eine Anlage zur Durchführung. Fig. 5 zeigt schematisch eine weitere Anlage zur Durchführung.

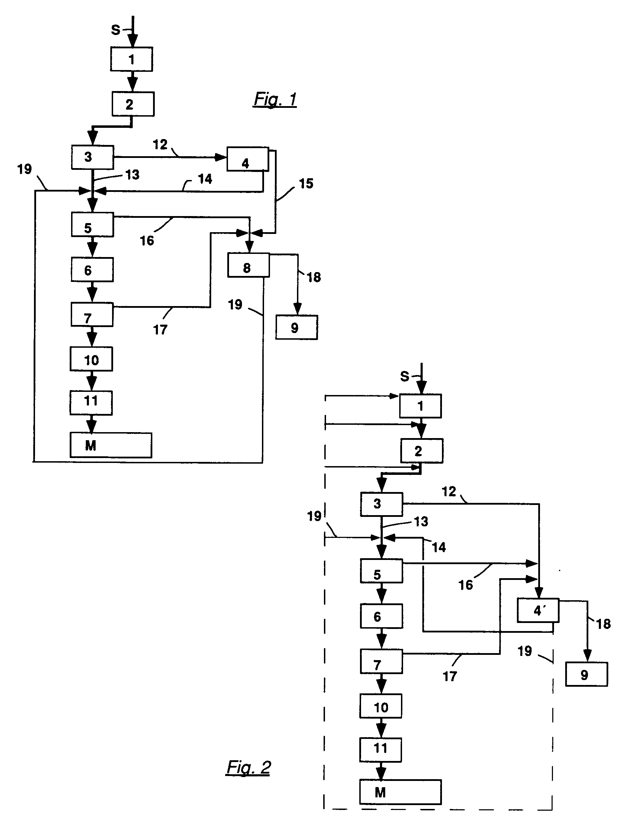

Am Beispiel der Fig. 1 wird der Altpapierstoff S der Auflösung 1 zugeführt, worauf die Vorreinigung 2 und ein Waschvorgang 3 folgen. Das Waschfiltrat 12 gelangt in die Filtratflotation 4, von der aus eine gereinigte Fraktion 14 zurückfließt in den Gutstoff 13 des Waschvorgangs 3. Der Filtratflotationsschaum 15 gelangt in die Rejektflotation 8, deren Flotationsschaum 18 in die Rejektaufbereitung 9 abgeführt wird, wo er deponiefähig gemacht wird. Das gereinigte Wasser 19 aus der Rejektflotation 8 wird in diesem Falle ebenfalls dem Gutstoff 13 aus dem Waschvorgang 3 zugeleitet. Es ist aber auch ein anderer Einsatz dieses Wassers vorstellbar, wie etwa bei der Auflösung 1, Vorreinigung 2 oder dem Waschvorgang 3. In dem dem Waschvorgang 3 folgenden Flotationsvorgang 5 wird der Flotationsschaum 16 gebildet, der ebenfalls zur Aufbereitung in die Rejektflotation 8 gelangen kann. Bei der hier gezeigten besonders effektiven Ausführungsform des Verfahrens folgt dem Flotationsvorgang 5 ein weiterer Flotationsvorgang 7, nachdem der Faserstoff in einer Dispergierstufe 6 so behandelt wurde, daß u.a. eine weitere Ablösung von eventuell anhaftenden Störstoffpartikeln erfolgen konnte. Dieser Dispergiervorgang kann vorteilhaft mit einer Bleiche verbunden sein. Nach dem genannten weiteren Flotationsvorgang 7 können noch eine Eindickung 10 und eine Nachbleiche 11 erfolgen; danach gelangt der Stoff in den Papiermaschinen-Vorrat M. In der Regel wird der Flotationsschaum 17 aus dem weiteren Flotationsvorgang 7 ebenfalls der Rejektflotation 8 zugeführt werden.

Gemäß Fig. 2 wird das Verfahren variiert. So wird hier die Behandlung des Waschfiltrates 12 in dem Fall in einer integralen Rejektflotation 4' durchgeführt, wobei sich dort neben dem Waschfiltrat 12 auch die Flotationschäume 16 und 17 aufbereiten lassen. Auch ist gezeigt, daß Anteile des gereingten Wassers auch an weiteren Stellen der Stoffaufbereitung zur Verdünnung nutzbar sind (gestrichelte Linien), sowie auch in der zweiten Flotation (7).

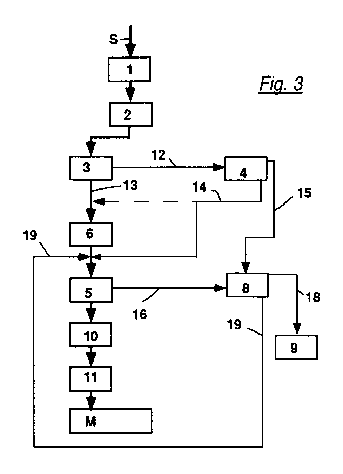

Fig. 3 stellt schematisch ein im Vergleich zu Fig.1 vereinfachtes Verfahren dar, bei dem bereits ein Flotationsvorgang 5 für den Hauptstrom ausreicht. Wenn, wie hier gezeichnet, die Dispergierstufe 6 vor der Flotation liegt, fördert sie besonders die Ablösung der Schmutzteilchen, was für den nachfolgenden Flotationsvorgang (5) günstig ist. In dem Falle kann die gereinigte Fraktion 14 aus der Filtratflotation 4 auch in den Zulauf zum Flotationsvorgang 5 des Hauptstromes geführt werden. Ist die Dispergierstufe 6 nach der Flotation, dient sie im wesentlichen dazu, Restverunreinigungen unter die Schädlichkeitsgrenze zu bringen. Wesentlich ist, daß in jedem Falle durch die vorangegangene Wäsche 3 die Gefahr, bei der Dispergierung feine Teichen in den Faserstoff einzureiben (Vergrauung !), gering ist. Die Dispergierung ist aber unter Umständen bei weniger strengen Qualitätsanforderungen auch wegzulassen.

Diese genannten Variationen sind voneinander unabhängig und frei kombinierbar.

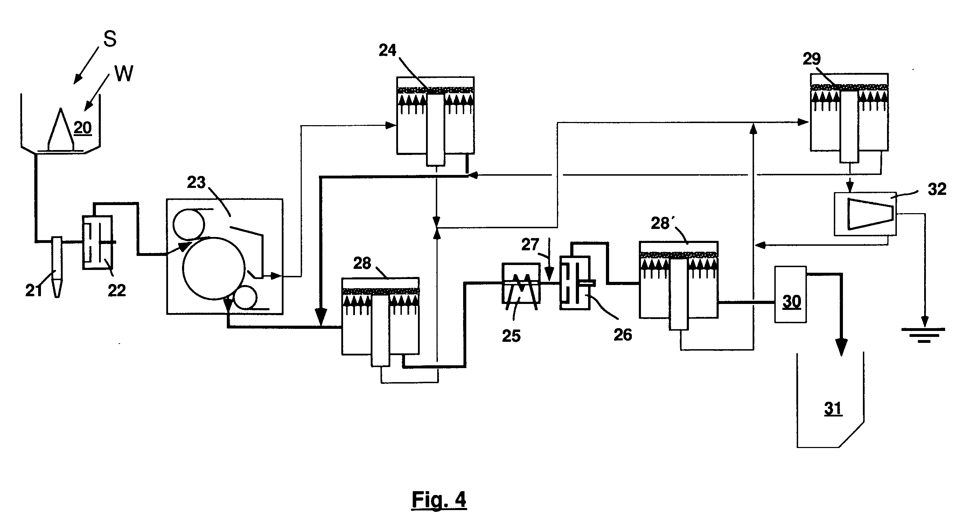

Fig. 4 zeigt in schematischer Anordnung eine Anlage, in der das erfindungsgemäße Verfahren durchgeführt werden kann, wobei diese Anlage aufgrund der Vielzahl verschiedener Verfahrensstufen besonders effektiv arbeitet. Der Stoff S wird in einem Hochkonsistenz-Stofflöser 20 mit Wasser W aufgelöst, einer Reinigungsstufe 21 und einem Entstipper 22 zugeführt und gelangt in einen Hochleistungswäscher 23. Das verunreinigte Filtrat wird der Filtratflotationszelle 24 zugeführt. Der gereinigte Stoff selbst gelangt zusammen mit dem gereinigten Wasser aus der Filtratflotationszelle 24 in eine Deinking-Flotationszelle 28. Der gereinigte Stoff aus der Deinking-Flotationszelle gelangt nach nicht dargestellter Eindickung in eine Heizschnecke 25, in der er auf Temperaturen nahe 100°C aufgewärmt wird. Anschließend erfolgt die Zugabe eines Bleichmittels 27 und die Behandlung in einer Dispergervorrichtung 26. Wie bereits erwähnt, kann durch eine nachfolgende Flotationszelle 28' eine weitere Verbesserung der Stoffqualität erzielt werden, was aber nicht immer erforderlich ist. Der Gutstoff dieser weiteren Flotationszelle 28' kommt nach weiterer Bleiche 30 in die Stapelbütte 31. Von dort kann er von der Papiererzeugungsmaschine abgerufen werden. Die Flotationsschäume der bisher genannten Flotationszellen 24, 28 und 28' gelangen alle in eine der Rejektflotation dienenden Klärflotationszelle 29. Dessen Schaum wiederum wird nach Eindickung, etwa in einer Zentrifuge 32, verworfen. Das gereinigte Wasser wird zweckmäßigerweise in die Klarflotationszelle 29 zurückgeführt.

Die in Fig. 4 dargestellte Anlage ist relativ aufwendig und bringt beste Ergebnisse. Bei weniger hohen Anforderungen ist es ohne weiteres denkbar, die Flotationszelle 28' und die Nachbleiche 30 wegzulassen. Ferner ist, wie die Ansprüche zeigen, auch eine andere Reihenfolge der Verfahrensschritte möglich. Nicht zuletzt kann auch für die mechanische Reinigung des aufgelösten Stoffes ein anderes Konzept gewählt werden.

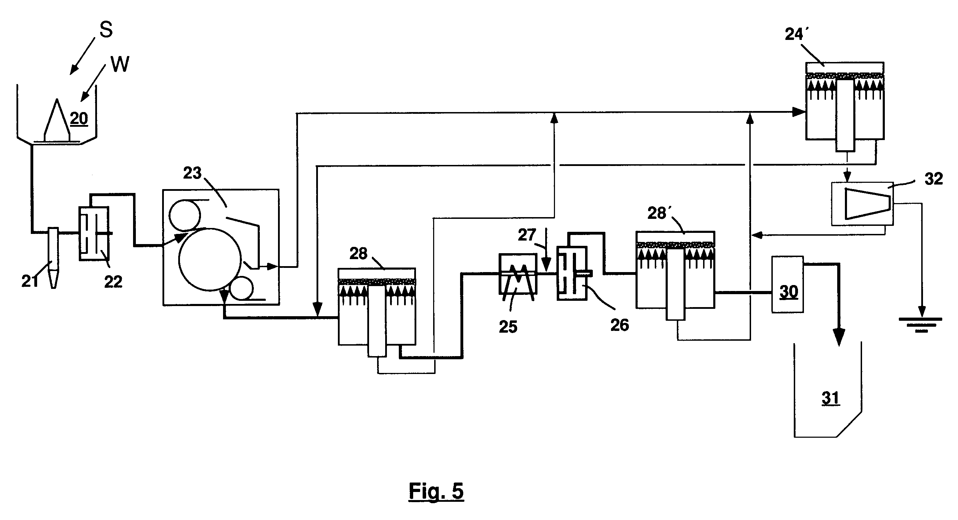

Gemäß Fig. 5 ist eine Anlage vorgeschlagen, bei der die Rejektflotationszelle 24' in sehr ökonomischer Weise das Waschfiltrat aus dem Hochleistungswäscher 23 zusammen mit den Schäumen aus den Deinking-Flotationszellen 28 und 28'reinigen kann.

## Patentansprüche

1. Verfahren zur Entfernung von feinen Verunreinigungen aus Altpapierfaserstoff, wobei der Altpapierfaserstoff (S) nach seiner Suspendierung im Wasser, der sogenannten Auflösung (1), und eventueller Vorreinigung (2) durch mindestens einen Waschvorgang (3) und einen direkt oder indirekt folgenden Flotationsvorgang (5) von enthaltenen feinen Verunreinigungen gereinigt wird, wodurch sowohl ein Waschfiltrat (12), als auch ein Flotationsschaum (16) als Fraktionen anfallen, welche beiden Fraktionen (12 und 16) mit den Verunreinigungen angereichert sind,
**dadurch gekennzeichnet,**
daß das Waschfiltrat (12) einer Filtratflotation (4) unterzogen wird, welche einen mit Verunreinigungen angereicherten Flotationsschaum (15) erzeugt sowie eine gereinigte Fraktion (14), den Filtrat-Flotationsgutstoff, und daß dieser Filtrat-Flotationsgutstoff zumindest teilweise dem Gutstoff (13) aus dem Waschvorgang (3) zugeleitet wird.

2. Verfahren nach Anspruch 1,
**dadurch gekennzeichnet,**
daß der Flotationsschaum (15) aus der Filtratflotation (4) einer Rejektflotation (8) unterzogen wird, deren Flotationsschaum (18) einer Entsorgung (9) zugeleitet wird und daß das gereinigte Wasser (19) zu dem zur Papiererzeugung dienenden Faserstoff geführt wird.

3. Verfahren nach Anspruch 2,
**dadurch gekennzeichnet,**
daß die Zuleitung des gereinigten Wassers (19) zum Gutstoff (13) aus dem Waschvorgang (3) erfolgt.

4. Verfahren nach Anspruch 1,
**dadurch gekennzeichnet,**
daß der Altpapierfaserstoff in einem weiteren Flotationsvorgang (7) gereinigt wird, dessen Flotationsschaum (17) mit Verunreinigungen angereichert ist.

5. Verfahren nach Anspruch 2 und 4,
**dadurch gekennzeichnet,**
daß der Flotationsschaum (17) in die Rejektflotation (8) eingeleitet wird.

6. Verfahren nach Anspruch 4,
**dadurch gekennzeichnet,**
daß vor dem weiteren Flotationsvorgang (7) eine Dispergierstufe (6) vorgeschaltet ist.

7. Verfahren nach Anspruch 6,
**dadurch gekennzeichnet,**
daß in der Dispergierstufe (6) zusätzlich gebleicht wird.

8. Verfahren nach Anspruch 5 oder 6,
**dadurch gekennzeichnet,**
daß gereinigtes Wasser aus der Filtratflotation (4) als Verdünnungswasser der weiteren Flotation (7) zugesetzt wird.

9. Verfahren nach Anspruch 1,
**dadurch gekennzeichnet,**
daß die Betriebsbedingungen der Filtratflotation (4) in der Weise eingestellt werden, daß der daraus abgezogene Flotationsschaum (15) höchstens die Hälfte der im Zulauf enthaltenen Feststoffe enthält.

10. Verfahren nach Anspruch 9,
**dadurch gekennzeichnet,**
daß die Betriebsbedingungen der Filtratflotation (4) in der Weise eingestellt werden, daß der daraus abgezogene Flotationsschaum (15) ca. ein Drittel der im Zulauf enthaltenen Feststoffe enthält und die gereinigte Fraktion (14) ca. zwei Drittel.

11. Verfahren nach Anspruch 1,
**dadurch gekennzeichnet,**
daß der Flotationsschaum (15) aus der Filtratflotation (4) einer Entsorgung (9) zugeleitet wird.

12. Verfahren nach Anspruch 11,
**dadurch gekennzeichnet,**
daß die Filtratflotation (4) und die Rejektflotation (8) in einem Flotationsvorgang (4') kombiniert sind, daß aus anderen Flotationsvorgängen anfallende Schäume mitgereinigt werden können und daß das gereinigte Wasser (19) zu dem zur Papiererzeugung dienenden Faserstoff geleitet wird.

13. Verfahren nach Anspruch 1 oder 2,
**dadurch gekennzeichnet,**
daß unmittelbar nach dem Waschvorgang (3) eine Dispergierstufe (6) folgt, in der der Stoff aufgeheizt, mit Bleichmittel versehen und dispergiert wird, worauf sich der Flotationsvorgang (5) direkt oder indirekt anschließt.

14. Verfahren nach Anspruch 2 und 13,
**dadurch gekennzeichnet,**
daß die gereinigte Fraktion (14) aus der Filtratflotation (4) zumindest teilweise dem zur Papiererzeugung dienenden Faserstoff vor dem Flotationsvorgang (5) zugeleitet wird.

15. Anwendung des Verfahrens nach einem der vorangehenden Ansprüche,
**dadurch gekennzeichnet,**
daß das eingesetzte Altpapier mit bei der Auflösung in relativ feine Partikel zerfallenen Druckfarben bedruckt ist.

## Claims

1. Process for removal of fine impurities from waste paper whereby fibres (S) from waste paper are cleaned of fine impurities after suspension in water, formation of a solution (1), and possible pre-purification (2), by means of at least one washing process (3) and a following direct or indirect flotation process (5), whereby both a purification filtrate (12) and also a flotation foam (16) are produced as fractions which both carry impurities,
**wherein**
a purification filtrate (12) is subjected to a filtrate flotation (4) which produces a flotation foam (15) which carries impurities and also a purified fraction (14), a filtrate material, and this filtration material partly had a material (13) from a purification process (3) fed into it.

2. Process in accordance with claim 1,
**wherein**
flotation foam (15) from filtrate flotation (4) is subjected to reject flotation (8), flotation foam (18) of which is fed to removal means (9) and purified water (19) is guided to fibres used to produce paper.

3. Process in accordance with claim 2,
**wherein**
there is supplying of purified water (19) to material (13) from a purification process (3).

4. Process in accordance with claim 1,
**wherein** waste-paper fibres are washed in a further flotation process (7), flotation foam (17) of which is loaded with impurities.

5. Process in accordance with claims 2 and 4,
**wherein**
flotation foam (17) is supplied into reject flotation (8).

6. Process in accordance with claim 4,
**wherein**
a dispersing stage (6) is connected in before a further flotation process (7).

7. Process in accordance with claim 6,
**wherein**
bleaching additionally occurs in a dispersing stage (6).

8. Process in accordance with claim 5 or claim 6,
**wherein**
purified water from filtrate flotation (4) is added to a further flotation (7) as thinning water.

9. Process in accordance with claim 1,
**wherein**
operating conditions of filtrate flotation (4) are set such that a flotation foam (15) drawn off from this does not contain more than half a solid material in a supply concerned.

10. Process in accordance with claim 9,
**wherein**
operating conditions of filtrate flotation (4) are set such that flotation foam (15) drawn from this contains approximately a third of solid materials in a supply concerned and a purified fraction (14) contains approximately two thirds.

11. Process in accordance with claim 1,
**wherein**
a flotation foam (15) from filtrate flotation (4) is supplied to removal means (9).

12. Process in accordance with claim 11,
**wherein**
filtrate flotation (4) and a reject flotation (8) are combined in a flotation process (4'), foams produced by other flotation processes can be purified with this and purified water (19) is directed to fibres used for producing paper.

13. Process in accordance with claim 1 or claim 2,
**wherein**
a dispersing stage (6), in which material concerned is heated, provided with a bleaching agent and is dispersed, follows immediately after a purification stage (3), whereupon a flotation process (5) follows indirectly or directly.

14. Process in accordance with claims 2 and 1,
**wherein**
a purified fraction (14) from filtrate flotation (4) is at least partly directed into fibres used for producing paper, before a flotation process (5).

15. Use of a process in accordance with any one of foregoing claims,
**wherein**
paper used is printed on, during formation of a solution, with printing inks which have dissociated into relatively fine particles.

## Revendications

1. Procédé d'élimination d'impuretés fines d'une pâte de vieux papier, dans lequel la pâte (S) de vieux papier est, après sa mise en suspension dans l'eau, opération dite désagrégation (1), et après une épuration préalable (2) éventuelle, débarrassée des impuretés fines par au moins une opération de lavage (3) et une opération de flottation (5) lui succédant directement ou indirectement, ce qui donne lieu à un filtrat de lavage (12) ainsi qu'à une mousse de flottation (16) en tant que fractions, lesquelles deux fractions (12 et 16) sont enrichies en impuretés,
**caractérisé** en ce que le filtrat de lavage (12) est soumis à une flottation de filtrat (4) qui produit une mousse de flottation (15) enrichie en impuretés, ainsi qu'une fraction épurée (14), le bon produit de la flottation du filtrat, et en ce que ce bon produit provenant de la flottation du filtrat est ajouté au moins partiellement au bon produit (13) provenant de l'opération de lavage (3).

2. Procédé selon la revendication 1, caractérisé en ce que la mousse de flottation (15) venant de la flottation (4) du filtrat est soumise à une flottation (8) des rejets dont la mousse de flottation (18) est envoyée à un traitement d'élimination (9) et en ce que l'eau épurée (19) est envoyée à la pâte servant à la fabrication de papier.

3. Procédé selon la revendication 2, caractérisé en ce que l'eau épurée (19) est envoyée au bon produit (13) sortant du lavage (3).

4. Procédé selon la revendication 1, caractérisé en ce que la pâte de vieux papier est épurée dans une deuxième opération de flottation (7) dont la mousse de flottation (17) est enrichie en impuretés.

5. Procédé selon les revendications 2 et 4, caractérisé en ce que la mousse de flottation (17) est introduite dans la flottation des rejets (8).

6. Procédé selon la revendication 4, caractérisé en ce qu'un étage de dispersion (6) est disposé en amont de la deuxième opération de flottation (7).

7. Procédé selon la revendication 6, caractérisé en ce que dans l'étage de dispersion a lieu en supplément un blanchiment.

8. Procédé selon la revendication 5 ou 6, caractérisé en ce que l'eau épurée provenant de la flottation du filtrat (4) est ajoutée comme eau de dilution à la deuxième flottation (7).

9. Procédé selon la revendication 1, caractérisé en ce que les conditions de fonctionnement de la flottation du filtrat (4) sont réglées de telle manière que la mousse de flottation (15) retirée de cette flottation contient au maximum la moitié des solides contenus à l'arrivée.

10. Procédé selon la revendication 9, caractérisé en ce que les conditions de fonctionnement de la flottation du filtrat (4) sont réglées de telle manière que la mousse de flottation (15) retirée de cette flottation contient environ un tiers des solides contenus à l'arrivée et la fraction épurée (14) en contient environ deux tiers.

11. Procédé selon la revendication 1, caractérisé en ce que la mousse de flottation (15) venant de la flottation du filtrat (4) est envoyée à un traitement d'élimination (9).

12. Procédé selon la revendication 11, caractérisé en ce que la flottation du filtrat (4) et la flottation des rejets (8) sont combinées en une opération de flottation (4'), en ce que les mousses provenant d'autres opérations de flottation peuvent être épurées conjointement, et en ce que l'eau épurée (19) est envoyée à la pâte servant à la production de papier.

13. Procédé selon la revendication 1 ou 2, caractérisé en ce qu'après le lavage (3) fait suite immédiatement un étage de dispersion (6) dans lequel la pâte est chauffée, additionnée d'agent de blanchiment et dispersée, sur quoi le processus de flottation (5) fait suite directement ou indirectement.

14. Procédé selon les revendications 2 et 13, caractérisé en ce que la fraction épurée (14) provenant de la flottation du filtrat (4) est amenée, au moins partiellement, avant le processus de flottation (5), à la pâte servant à la production de papier.

15. Application du procédé selon une des revendications précédentes, caractérisée en ce que le vieux papier utilisé est imprimé avec des encres qui se désagrègent en particules relativement fines lors de la dissolution.
